(19) Europäisches Patentamt
European Patent Office
Office européen des brevets

(11) Numéro de publication : 0 345 111 B1

# (12) FASCICULE DE BREVET EUROPEEN

(45) Date de publication du fascicule du brevet : **21.07.93 Bulletin 93/29**

(51) Int. Cl.[5] : **C08G 65/28,** B01F 17/00, A01N 25/00

(21) Numéro de dépôt : **89401340.8**

(22) Date de dépôt : **12.05.89**

## (54) Agent tensio-actif à base de (phényl-1 éthyl) phénols polyoxyéthyléné et oxypropyléné, son procéde de préparation et son application à l'obtention de solutions concentrées émulsionnables de matières actives.

Le dossier contient des informations techniques présentées postérieurement au dépôt de la demande et ne figurant pas dans le présent fascicule.

(30) Priorité : **27.05.88 IT 2077788**

(43) Date de publication de la demande : **06.12.89 Bulletin 89/49**

(45) Mention de la délivrance du brevet : **21.07.93 Bulletin 93/29**

(84) Etats contractants désignés : **BE DE FR GB IT NL SE**

(56) Documents cités :
**EP-A- 0 025 139**
**EP-A- 0 055 401**
**EP-A- 0 341 126**
**FR-A- 2 234 265**
**FR-A- 2 452 250**
**GB-A- 2 007 692**
**JP-A- 5 025 526**

(73) Titulaire : **RHONE-POULENC GERONAZZO S.p.A.**
**Via Milano 78**
**I-20021 Ospiate di Bollate Milano (IT)**

(72) Inventeur : **Marchetto, Antonio**
**9, rue Giotto**
**I-21047 - Saronno (Varese) (IT)**
Inventeur : **Mascheroni, Anghelito**
**16, rue de Rande**
**I-20017 Rho (Milano) (IT)**
Inventeur : **Ruffo, Georges**
**40, route de l'Espra Charly**
**F-69390 - Vernaison (FR)**

(74) Mandataire : **Seugnet, Jean Louis et al**
**RHONE-POULENC CHIMIE Direction de la Propriété Industrielle 25, Quai Paul Doumer**
**F-92408 Courbevoie Cedex (FR)**

EP 0 345 111 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un agent tensio-actif à base de poly (phényl-1 éthyl) phénols portant des motifs polyoxyéthylénés et polyoxypropylénés statistiquement répartis et son application à l'obtention de solutions concentrées émulsionnables de matières actives qui sont ensuite diluées pour obtenir des émulsions prêtes à l'emploi.

Il est connu de formuler des compositions biocides susceptibles d'être dispersées dans l'eau à l'aide de tensio-actifs du type tri (phényl-1 éthyl) phénols polyoxyéthylénés ou portant des motifs polyoxyéthylénés et polyoxypropylénés répartis d'une manière séquencée (Brevet Japonais publié sous le n° Kokoku 25526/1975).

L'inconvénient majeur de ce type d'agent tensio-actif consiste en ce que leur solubilité dans les solvants organiques utilisés dans le domaine phytosanitaire est insuffisante.

La Demanderesse a trouvé un agent tensio-actif soluble dans ce type de solvants.

L'agent tensio-actif faisant l'objet de l'invention est constitué d'au moins un poly (phényl-1 éthyl) phénol poly-oxyéthyléné et -oxypropyléné de formule (I) suivante :

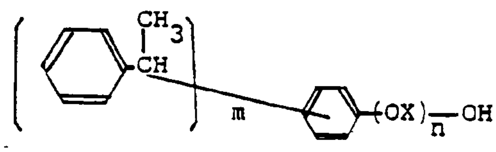

(I)

formule dans laquelle :

. m est égal à 2 ou 3

. $(OX)_n$ représente une succession statistique de motifs oxyéthylénés et de motifs oxypropylénés

. n étant tel que le nombre total de motifs oxyalcoylénés du radical $(OX)_n$ va de 16 à 35, et de préférence de 20 à 30, avec un rapport nombre de motifs oxyéthylénés / nombre de motifs oxypropylénés allant de 75/25 à 90/10 et de préférence de 80/20 à 90/10.

L'agent tensio-actif faisant l'objet de l'invention peut être obtenu à partir d'au moins un poly (phényl-1 éthyl) phénol de formule (II) :

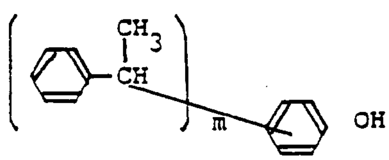

(II)

Cette opération est réalisée pendant une durée de l'ordre de 20 à 40 minutes à une température de 140-180°C, en présence de 0,5 à 1,5 % en poids par rapport au produit fini d'une base alcaline, telle que la soude, comme catalyseur.

La présente invention a également pour objet les solutions concentrées émulsionnables obtenues par formulation de matières actives solubles dans les solvants organiques à l'aide de l'agent tensio-actif faisant l'objet de l'invention.

A titre de matières actives susceptibles de former des solutions concentrées émulsionnables on peut citer les insecticides, acaricides, les fongicides et leurs diverses associations, les herbicides, les nématicides, les molluscicides, les attractifs, les répulsifs, les rodenticides.

Comme exemples d'insecticides convenant à l'invention, on peut citer ceux qui appartiennent aux familles :

- des organo-halogénés ou chlorés ;
- des carbinols ;
- des organophosphorés ;
- des sulfones et sulfonates ;
- des carbamates ;
- des benzoyl urées ;
- les pyrethrinoides de synthèse.

Les fongicides susceptibles d'être mis en oeuvre dans l'invention peuvent être choisis parmi :

- les carbamates ;
- les dérivés du benzène ;

- les dérivés du phénol ;
- les quinones ;
- les dicarboximides ;
- les amines, les amides ;
- les diazines
- les sulfamides et dérivés soufrés ;
- les guanidines ;
- les composés hétérocycliques ;
- les monoéthyl phosphites métalliques ;
- les organostanniques.

A titre de substances chimiques présentant des propriétés herbicides, on peut faire appel à celles qui se retrouvent dans les familles chimiques suivantes :

- les composés phénoliques ;
- les carbamates ;
- les urées substituées ;
- les diazines ;
- les triazines ;
- les amides ;
- les ammoniums quaternaires ;
- les benzonitriles ;
- les toluidines ;
- les triazoles et autres.

Les solutions concentrées émulsionnables sont favorablement constituées :

- d'au moins une matière active
- d'un solvant organique de ladite matière active
- de l'agent tensio-actif de l'invention éventuellement additionné d'un ou plusieurs tensio-actif(s) anionique(s), cationique(s), non-ionique(s) ou amphotère(s) usuel(s) dans ce type d'application
- d'un agent mouillant éventuel
- éventuellement d'un stabilisant
- et des adjuvants divers.

Les solvants organiques pouvant être mis en oeuvre sont ceux habituellement utilisés dans ce type de formulation. On peut citer à titre d'exemple les hydrocarbures aromatiques, la cyclohéxanone, le méthylhéxahydronaphtalène, le tétrahydronaphtalène le diméthylsulfoxyde, le diméthyl formamide, le phtalate de dibutyle, l'isophorone, la N-méthylpyrrolidone, la butyrolactone ... Ledit solvant peut éventuellement être supprimé si la matière active mise en oeuvre est liquide à une température de -20 à 50°C.

L'agent tensio-actif de l'invention présente en lui-même un pouvoir mouillant ; de ce fait la présence d'un agent mouillant n'est pas indispensable ; si toutefois la présence d'un tel agent est désirée, celui-ci pourra être choisi par les suivants :

- les savons de métaux alcalins tels que les sels de sodium ou de potassium d'acides gras saturés ou insaturés en $C_8$-$C_{24}$, le N-lauryl sarcosinate de sodium, le N-acylsarcosinate de sodium
- les sulfonates alcalins tels que les alcoylsulfonates du type diéthylhexylsulfocuccinate de sodium ; les alcoylbenzène sulfonates du type nonyl- ou dodécyl-benzènesulfonates de sodium, de diéthanolamine, de triéthanolamine ou de N-méthylcyclohexylamine ; les alcoylnaphtalène sulfonates alcalins ; les N-alcoyltaurates alcalins
- les sulfates et les produits sulfatés tels que les alcylsulfates alcalins du type laurylsulfate de sodium ; les alcools gras polyoxyéthylénés et sulfatés ; les alcoylphénols polyoxyéthylénés et sulfatés.

Parmi les stabilisants éventuels pouvant être mis en oeuvre, on peut citer les acides organiques choisis parmi les acides monocarboxyliques aliphatiques éventuellement halogénés (formique, monochloracétique, propionique, citrique, tartrique ...), hydroxycarboxyliques aliphatiques (glycolique ...) aromatiques (benzoïque, phtalique...) éventuellement substitués (dichlorobenzoïque, diméthoxybenzoïque, hydroxybenzoïque, dihydroxybenzoïque, nitrobenzoïque, nitroisophtalique ...), les acides sulfoniques (méthane sulfonique, benzène sulfonique, p-toluène sulfonique...).

On entend par adjuvants divers les autres ingrédients ou additifs usuels dans la formulation de produits agricoles, notamment des agents de pénétration, des inhibiteurs de corrosion, des adhésifs...

Les proportions pondérales des différents constituants des solutions concentrées émulsionnables sont généralement les suivantes :

- de 0,1 à 90 parties en poids de matière active
- de 0,5 à 25 parties en poids d'agent tensio-actif de l'invention

- de 0 à 25 parties d'agent mouillant
- et le complément à 100 parties en solvant organique.

Lesdites solutions concentrées émulsionnables peuvent être obtenues d'une manière connue, par exemple par mélange des différents constituants et agitation jusqu'à homogénéisation.

Il suffit ensuite de les diluer par une quantité déterminée d'eau pour obtenir des émulsions prêtes à l'emploi.

Les solutions concentrées émulsionnables présentent les propriétés suivantes :

- bonne stabilité au stockage
- bonne stabilité pendant toute la durée de l'application, une fois diluées dans l'eau à la dose d'emploi.

OE signifie motif oxyde d'éthylène (ou éthoxylé)
OP signifie motif oxyde de propylène (ou propoxylé)

## EXEMPLES 1-7

On verse 1 g d'agent tensio-actif (T-A), agent dont les caractéristiques figurent au tableau I, dans 20 $cm^3$ de xylène ou de SHELLSOL AB commercialisé par SHELL.

Le mélange est agité pendant 5 minutes à l'aide d'un agitateur magnétique.

L'aspect de la solution obtenue est contrôlé après un séjour de 72 heures à 0°C (méthode CIPAC MT 39.1).

On constate que toutes les solutions sont limpides.

## EXEMPLES 8-12

Les contrôles de solubilité décrits aux exemples 1 à 7 sont répétés en remplaçant l'agent tensio-actif de l'invention par un des produits suivants :

- (exemple 8) SOPROPHOR CY/8, tri(phényl-1 éthyl) phénol éthoxylé portant 20 moles d'oxyde d'éthylène, commercialisé par RHONE-POULENC
- (exemple 9) tri (phényl-1 éthyl) phénol portant une séquence propoxylée $(OP)_{n1}$ et une séquence étoxylée $(EO)_{n2}$ terminale, c'est-à-dire un produit dont de groupe $(OX)_n$ OH est $(OP)_{n1}$ $(OE)_{n2}$ OH, avec un nombre de motifs EO+OP de 25 et un rapport OE/OP de 90/10
- (exemple 10) tri(phényl-1 éthyl) phénol portant une séquence $(OP)_{n1}$ et une séquence $(OE)_{n2}$ terminale, avec un nombre de motifs OE/OP de 34 et un rapport OE/OP de 90/10
- (exemple 11) tri(phényl-1 éthyl) phénol portant une séquence $(OE)_{n1}$ et une séquence $(OP)_{n2}$ terminale, c'est-à-dire un produit dont le groupe $(OX)_n$OH est $(OE)_{n1}$ $(OP)_{n2}$ OH, avec un nombre de motifs OE+OP de 25 et un rapport OE/OP de 90/10
- (exemple 12) tri(phényl-1 éthyl) phénol portant une séquence $(OE)_{n1}$ et une séquence $(OP)_{n2}$ terminale, avec un nombre de motifs OE+OP de 34 et un rapport OE/OP de 90/10.

Les résultats des tests de contrôle figurent au tableau II (méthode CIPAC MT 39.1).

On constate qu'aucune des solutions n'est limpide et qu'un certain nombre d'entre elles contient des sédiments.

## EXEMPLES 13-15 COMPARATIFS

On prépare un agent tensio-actif dont les caractéristiques sont données au tableau I.

## Stabilité des concentrés émulsionnables

On prépare des concentrés émulsionnables à partir de différentes matières actives, selon le procédé suivant :

On dissout la matière active dans du xylène puis on ajoute un tensio-actif (T.A.) faisant l'objet d'un des exemples 2 à 16 et du dodécylbenzène sulfonate de calcium (CaDDBS). Les quantités de constituants mises en oeuvre dépendent de la matière active utilisée :

| | | | |
|---|---|---|---|
| - diazinone | 60 parties en poids | | |
| T.A. | 2,6 | " | " |
| CaDDBS | 2,4 | " | " |
| xylène | 35 | " | " |
| - lindane | 20 parties en poids | | |
| T.A. | 3,1 | " | " |
| CaDDBS | 1,9 | " | " |
| xylène | 75 | " | " |

| | | | |
|---|---|---|---|
| - malathion | 50 parties en poids | | |
| T.A. | 3,4 | " | " |
| CaDDBS | 2,6 | " | " |
| xylène | 45 | " | " |
| - trifluralin | 25 parties en poids | | |
| T.A. | 2,3 | " | " |
| CaDDBS | 2,7 | " | " |
| xylène | 70 | " | " |

Le mélange obtenu est agité jusqu'à homogénéisation ; on obtient ainsi des compositions concentrées liquides émulsionnables.

La stabilité des émulsions dans l'eau préparées à partir de ces compositions est mesurée selon la méthode CIPAC MT 36.1 dans des eaux standardisées A (20 ppm de dureté), D (342 ppm de dureté) et C (500 ppm de dureté) après 60 minutes de 120 minutes.

Les résultats de ce test figurent aux tableaux III et IV.

On constate qu'il est impossible de préparer des concentrées émulsionnables à l'aide des produits des exemples 13 à 15.

TABLEAU I

| EXEMPLE | OE + OP | OE/OP | ASPECT DE LA SOLUTION T-A pur dans xylène | ASPECT DE LA SOLUTION T-A pur dans SHELLSOL |
|---|---|---|---|---|
| 1 | 16 | 90/10 | limpide | limpide |
| 2 | 20 | 90/10 | " | " |
| 3 | 25 | 90/10 | " | " |
| 4 | 34 | 90/10 | " | " |
| 5 | 25 | 84/16 | " | " |
| 6 | 20 | 80/20 | " | " |
| 7 | 25 | 80/20 | " | " |
| 13* | 16 | 50/50 | " | " |
| 14* | 25 | 50/50 | " | " |
| 15* | 34 | 50/50 | " | " |

* Exemple comparatif

TABLEAU II

| EXEMPLE | OE + OP | OE/OP | ASPECT DE LA SOLUTION T-A pur dans xylène | ASPECT DE LA SOLUTION T-A pur dans SHELLSOL |
|---|---|---|---|---|
| 8** | 20 OE | 100/0 | 0,5 %* | 0,5 % * |
| 9** | 25-OP+OE | 90/10 | 5 % * | 15 % * |
| 10** | 34-OP+OE | 90/10 | 2 % * | 48 % * |
| 11** | 25-OE+OP | 90/10 | trouble | 5 % * |
| 12** | 34-OE+OP | 90/10 | trouble | 35 % * |

*: taux de sédiments

** Exemple comparatif

TABLEAU III

| MATIERE ACTIVE | | DIAZINONE | | | LINDANE | | | MALATHION | | | TRIFLURALIN | | |
|---|---|---|---|---|---|---|---|---|---|---|---|---|---|
| | | Stabilité de l'émulsion - crème en ml - | | | | | | | | | | | |
| produit de l'exemple | temps après dilution mm | A | D | C | A | D | C | A | D | C | A | D | C |
| 1 | 60 | 0 | 0 | 0 | 0 | 0 | 0 | 0 | 0,1 | 0,2 | 0,5 | 0 | 0 |
| | 120 | 0,5 | 0 | 0 | 0 | 0 | 0 | 2,5 | 1 | 0,5 | 2 | 0 | 0 |
| 2 | 60 | 1 | 0 | 0 | 0 | 0 | 0 | 0,6 | 0 | 0 | 0,5 | 0 | 0 |
| | 120 | 2 | 0 | 0 | 0 | 0 | 0 | 1 | 0 | 0 | 1 | 0 | 0 |
| 3 | 60 | 0 | 0 | 0 | 0 | 0 | 0 | 0 | 0 | 0 | 1,5 | 0 | 0 |
| | 120 | 0,5 | 0 | 0 | 0 | 0 | 0 | 0,7 | 0 | 0 | 2 | 0,05 | 0,05 |
| 4 | 60 | 0 | 0 | 0 | 0 | 0 | 0 | 0 | 0 | 0 | 2 | 0,5 | 0,05 |
| | 120 | 0,5 | 0 | 0 | 0 | 0 | 0 | 1,2 | 0,1 | 0,05 | 2,5 | 1 | 1 |
| 5 | 60 | 0,2 | 0 | 0 | 0 | 0 | 0 | 0,5 | 0 | 0 | 0 | 0 | 0 |
| | 120 | 0,5 | 0 | 0 | 0,5 | 0 | 0 | 1 | 0 | 0 | 1 | 0 | 0,5 |
| 6 | 60 | - | - | - | 0 | 0 | 0 | 0,6 | 0 | 0 | 1 | 0 | 0 |
| | 120 | - | - | - | 0 | 0 | 0 | 1,1 | 0 | 0 | 2 | 0 | 0 |
| 7 | 60 | 0 | 0 | 0 | 0 | 0 | 0 | 0,4 | 0 | 0 | 0 | 0 | 0 |
| | 120 | 0,5 | 0 | 0 | 0 | 0 | 0 | 0,8 | 0 | 0 | 0,5 | 0 | 1 |

TABLEAU IV

| MATIERE ACTIVE | | DIAZINONE | | | LINDANE | | | MALATHION | | | TRIFLURALIN | | |
|---|---|---|---|---|---|---|---|---|---|---|---|---|---|
| | | Stabilité de l'émulsion - crème en ml - | | | | | | | | | | | |
| produit de l'exemple | temps après dilution mm | A | D | C | A | D | C | A | D | C | A | D | C |
| 8* | 60 | 0,2 | 0 | 0 | 0 | 0 | 0 | 0,4 | 0 | 0 | 0,5 | 0 | 0 |
| | 120 | 0,5 | 0 | 0 | 0 | 0 | 0 | 0,8 | 0 | 0 | 1,5 | 0,1 | 0 |
| 9* | 60 | 1 | 0 | 0 | 0 | 0 | 0 | 0,4 | 0 | 0 | 0,5 | 0 | 0 |
| | 120 | 2 | 0 | 0 | 0 | 0 | 0 | 0,8 | 0 | 0 | 1,5 | 0,1 | 0 |
| 10* | 60 | 1 | 0 | 0 | 0 | 0 | 0 | 1 | 0 | 2 | 0,5 | 0 | 0 |
| | 120 | 2 | 0 | 0 | 0,5 | 0 | 0,5 | 2 | 0,1 | 5 | 1,5 | 0 | 1,2 |
| 11* | 60 | 1 | 0 | 0 | 0 | 0 | 0 | 0 | 0,05 | 5 | 2 | 0,5 | 0,5 |
| | 120 | 2 | 0 | 0,2 | 0,5 | 0,5 | 0,5 | 0,1 | 5 | 6 | 3 | 1 | 1 |
| 12* | 60 | 1 | 0 | 0 | 0 | 0 | 0 | 2 | 0,6 | 0,3 | 1,5 | 0,5 | 5 |
| | 120 | 2 | 0 | 0,5 | 0 | 0 | 0 | 3,5 | 1,2 | 0,7 | 2 | 1 | 6 |
| 13* | 60 | négatif | | | négatif | | | négatif | | | négatif | | |
| | 120 | | | | | | | | | | | | |
| 14* | 60 | négatif | | | négatif | | | négatif | | | négatif | | |
| | 120 | | | | | | | | | | | | |
| 15* | 60 | négatif | | | négatif | | | négatif | | | négatif | | |
| | 120 | | | | | | | | | | | | |

* Exemple comparatif

## Revendications

1. Agent tensio-actif caractérisé en ce qu'il est constitué d'au moins un poly (phényl-1 éthyl) phénol polyoxyéthyléné et -oxypropyléné de formule (I) suivante :

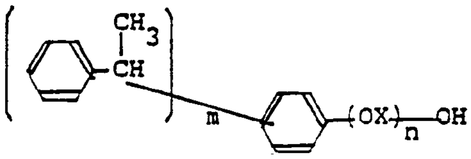

(I)

formule dans laquelle :
  - m est égal à 2 ou 3
  - $(OX)_n$ représente une succession statistique de motifs oxyéthylénés et de motifs oxypropylénés
  - n étant tel que le nombre total de motifs oxyalcoylénés du radical $(Ox)_n$ va de 16 à 35, avec un rapport nombre de motifs oxyéthylénés / nombre de motifs oxypropylénés allant de 75/25 à 90/10

2. Agent tensio-actif selon la revendication 1 caractérisé en ce que le rapport nombre de motifs oxyéthylénés / nombre de motifs oxypropylénés va de 80/20 à 90/10.

3. Utilisation de l'agent tensio-actif faisant l'objet de la revendication 1 ou 2 à l'obtention de solutions concentrées émulsionnables de matières actives phytosanitaires.

4. Solutions concentrées émulsionnables de matières actives phytosanitaires constituées :
  - de 0,1 à 90 parties en poids de matière active phytosanitaire
  - de 0,5 à 25 parties en poids d'agent tensio-actif faisant l'objet de la revendication 1 ou 2
  - de 0 à 25 parties d'agent mouillant
  - et le complément à 100 parties en solvant organique.

## Patentansprüche

1. Grenzflächenaktiver Wirkstoff, dadurch gekennzeichnet, daß er aus mindestens einem polyoxethylenierten und -oxypropylenierten (1-Phenylethyl)-Phenol der folgenden Formel (I) besteht:

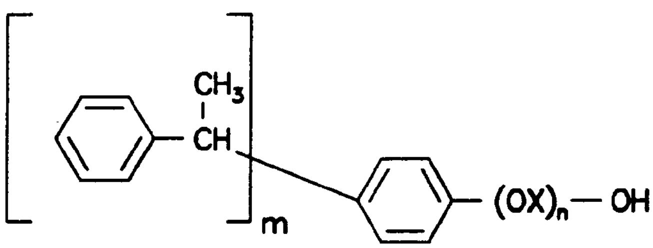

(I)

in dieser Formel
  - ist m gleich 2 oder 3,
  - stellt $(OX)_n$ eine unregelmäßige Folge von Oxethylen- und Oxypropylen-Einheiten dar)
  - liegt n, die Gesamtzahl der Oxalkylen-Einheiten des Restes $(OX)_n$, zwischen 16 und 35, wobei das Verhältnis *Zahl der Oxethylen-Einheiten / Zahl der Oxypropylen-Einheiten* zwischen 75/25 und 90/10 beträgt.

2. Grenzflächenaktiver Wirkstoff nach Anspruch 1, dadurch gekennzeichnet, daß das Verhältnis *Zahl der Oxethylen-Einheiten / Zahl der Oxypropylen-Einheiten* zwischen 80/20 und 90/10 beträgt.

3. Verwendung des grenzflächenaktiven Wirkstoffs, der Gegenstand des Anspruchs 1 oder 2 ist, zur Darstellung konzentrierter emulgierbarer Lösungen von Pflanzenschutzmitteln.

4. Konzentrierte emulgierbare Lösungen von Pflanzenschutzmitteln, bestehend aus:
   - 0,1 bis 90 Gewichtsanteilen Pflanzenschutzmittel,
   - 0,5 bis 25 Gewichtsanteilen des grenzflächenaktiven Wirkstoffs, der Gegenstand des Anspruchs 1 oder 2 ist,
   - 0 bis 25 Anteilen Benetzungsmittel

   und organischem Lösungsmittel zur Vervollständigung von hundert Gewichtsanteilen.

## Claims

1. Surface active agent characterised in that it comprises at least one poly-oxyethylenated and -oxypropylenated poly (1-phenyl ethyl) phenol of following formula (I):

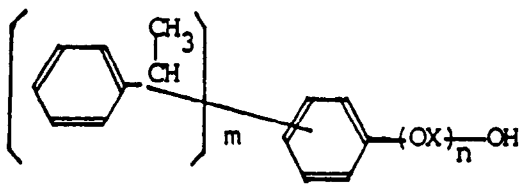

(I)

wherein:
   . m is 2 or 3
   . $(OX)_n$ represents a statistic succession of oxyethylenated units and oxypropylenated units
   . n being such that the total number of oxyalkylenated units of the radical $(OX)_n$ is between 16 and 35, with a ratio between the number of oxyethylenated units and the number of oxypropylenated units of between 75/25 and 90/10.

2. A surface active agent according to claim 1 characterised in that the ratio between the number of oxyethylenated units and the number of oxypropylenated units is between 80/20 and 90/10.

3. Use of the surface active agent according to claim 1 or claim 2 for producing emulsifiable concentrated solutions of phytosanitary active materials.

4. Emulsifiable concentrated solutions of phytosanitary active materials comprising:
   - from 0.1 to 90 parts by weight of phytosanitary active material
   - from 0.5 to 25 parts by weight of a surface active agent according to claim 1 or claim 2
   - from 0 to 25 parts of a wetting agent, and
   - an amount to make up 100 parts of organic solvent.